# EUROPÄISCHE PATENTSCHRIFT

(11) **EP 0 521 245 B1**
(45) Veröffentlichungstag und Bekanntmachung des Hinweises auf die Patenterteilung: **17.05.1995**
(21) Anmeldenummer: 92105265.0
(22) Anmeldetag: 27.03.1992
(51) Int. Cl.: B65G 15/56, B65G 15/34, B29D 29/06

(54) **Transportband und Verfahren zur Herstellung**
Conveyor belt and method of its manufacture
Bande transporteuse et procédé pour sa fabrication

(30) Priorität: 29.06.1991 DE 4121572
(43) Veröffentlichungstag der Anmeldung: 07.01.1993
(73) Patentinhaber: FORBO International S.A., 8193 Eglisau/Zürich (CH)
(72) Erfinder: Muraoka, Tomonori, Kakrgawa-city, Shizuoka-pref. (JP); Atsumi, Isato, Ogasa-gun, Shizuoka-pref. (JP)
(74) Vertreter: Braun, Dieter, Dipl.-Ing. Patentanwälte Hagemann & Kehl

(56) Entgegenhaltungen:
- AT-B- 200 861
- DE-B- 1 010 727
- DE-C- 3 807 814
- DE-U- 1 682 637
- FR-A- 1 373 653
- GB-A- 2 155 359

## Beschreibung

Die Erfindung bezieht sich auf ein Transportband mit einem Trägergewebe, das mit wenigstens einer Beschichtung aus einem thermoplastischen Kunststoff versehenen ist. Weiterhin betrifft die Erfindung ein Verfahren zur Herstellung des Transportbandes.

Transportbänder der genannten Gattung werden in großem Umfang als Leicht-Transportbänder für vielfältige Zwecke eingesetzt. Mittels des eingelagerten Trägergewebes ist es dabei möglich, den Transportbändern eine relativ hohe Längs- und Querstabilität zu geben. Durch die Anordnung von zwei und mehr Lagen eines Trägergewebes kann diese weiter erhöht werden.

Je nach den Anforderungen des Einsatzbereiches ist es dabei üblich, das Trägergewebe mit einer einseitigen oder auch beidseitigen Beschichtung mit einem thermoplastischen Kunststoff zu versehen. Die Beschichtung dient sowohl der Herstellung einer für den Transport von Materialien erforderlichen abgestimmten Griffigkeit als auch der Herstellung der erforderlichen Verschleißfestigkeit. Für die Beschichtung werden unterschiedliche Materialien mit unterschiedlichen Eigenschaften, wie z. B. PVC oder Polyurethan, verwendet.

Die bekannten Transportbänder der genannten Gattung weisen den grundsätzlichen Nachteil auf, daß an den Schnittkanten des Bandes das Trägergewebe offenliegt. Dieses führt z. B. bei einem Einsatz in der Textilindustrie dazu, daß es an den rauhen Schnittkanten derartiger Transportbänder zu einer zum Teil starken Faserhaftung kommt, aus der häufig Funktionsstörungen resultieren. Aufgrund eines an den Schnittkanten auftretenden Verschleißes kann zusätzliches Trägergewebe freigelegt werden, was zu einer Verstärkung des beschriebenen Effektes führt. Darüber hinaus können abgelöste Gewebeteilchen zu einer Verschmutzung der Umgebung führen. Dieses bedeutet, daß derartige Transportbänder z. B. in Reinräumen, wie sie heute beispielsweise bei der Fertigung elektronischer Bauteile häufig erforderlich sind, nicht eingesetzt werden können. Andererseits hat auch die Möglichkeit der Ablagerung von Bakterien bzw. Fremdkörpern an den an den Schnittkanten hervortretenden Gewebeteilen den Einsatz dieser Transportbänder beispielsweise in der Lebensmittelindustrie erheblich behindert.

Versuche, die Schnittkanten der beschriebenen Transportbänder mittels Verschweißen zu versiegeln, sind daran gescheitert, daß es nicht gelingt, das Trägergewebe von der Oberfläche der Schnittkante des Transportbandes zu verdrängen. Das als in der Regel als Trägergewebe eingesetzte Polyestergewebe hat einen deutlich höheren Schmelzpunkt als die Beschichtungen, so daß diese wegschmelzen bzw. deformiert werden, bevor das Trägergewebe angeschmolzen bzw. weggeschmolzen wird. Sofern auch das Trägergewebe angeschmolzen wird entsteht eine rauhe, ungleichmäßige Oberfläche, an der sich gleichfalls Fremdkörper verstärkt absetzen können.

Bei gattungsfremden Bändern mit Gummigeweben ist es bekannt, Rundleisten aus Kunststoff zuzugießen (DE-A-1 010 727).

Der Erfindung liegt die Aufgabe zugrunde, die genannten Nachteile zu beseitigen und eine wirtschaftliche Möglichkeit zu schaffen, Transportbänder jederzeit mit einem sicheren Kantenschutz zu versehen.

Diese Aufgabe wird erfindungsgemäß durch die Merkmale des Anspruchs 1 gelöst. Die weitere Ausgestaltung der Erfindung ist den Unteransprüchen zu entnehmen.

Die Erfindung geht von der Erkenntnis aus, daß es, sofern das den Kantenschutz bildende thermoplastische, strangförmige Profilmaterial einen niedrigeren Schmelzpunkt hat als das thermoplastische Material der Beschichtung, überraschenderweise möglich ist, das Profilmaterial mit den Schnittkanten des Transportbandes zu verschweißen, ohne daß die Beschichtung geschädigt, d. h. verformt bzw. in ihren Oberflächeneigenschaften beeinträchtigt wird.

Das Material wird kurzzeitig soweit erwärmt, daß die Beschichtung lediglich angeschmolzen, während das Profilmaterial weichgeschmolzen wird. So wird eine sehr intensive Verschweißung erreicht, aber gleichzeitig erreicht, daß die Beschichtung auch im Bereich der Schnittkanten nicht deformiert wird und ihre an den Einsatzbereich des Transportbandes angepaßten Materialeigenschaften behält. Dabei wird die Schnittkante des Transportbandes vorzugsweise vollständig abgedeckt und ein sehr effektiver Kantenschutz erreicht.

Die erforderliche intensive Verschweißung, die ein Ablösen des Kantenschutzes aufgrund mechanischer Beanspruchungen verhindert, ergibt sich, da es an den Kontaktflächen der Schnittkanten zu einer Vermischung der angeschmolzenen bzw. geschmolzenen Materialien und außerdem in der Regel zu einem Einschmelzen der Materialien zwischen die nicht angeschmolzenen Fasern des Trägergewebes im Bereich der Kontaktflächen kommt.

Gemäß einer besonders bevorzugten Ausführungsform der Erfindung ist das strangförmige Profilmaterial als Rundschnur ausgebildet. Wie es sich gezeigt hat, paßt sich die an der Schnittkante des Transportbandes anliegende Seite der Rundschnur während des Verschweißens sehr gut an die Form der Schnittkante des Transportbandes an und verbindet sich vollflächig mit dem Transportband. Besonders vorteilhaft ist es, wenn das aufgeschweißte Profilmaterial, d. h. beispielsweise die Rundschnur die jeweilige Schnittkante des Tranportbandes mit dem offenen Rand des Trägergewebes völlig und ansatzlos abdeckt, wobei eine glatte, ebene Bandoberfläche erhalten bleibt. Die schnittkante wird somit völlig mit dem vorzugsweise eine glatte Oberfläche aufweisenden Material des Profilmaterials versiegelt und die Anlagerung von Fremdkörpern in optimaler Weise verhindert.

Darüber hinaus stellt das aufgeschweißte Profilmaterial einen Schutz bei mechanischer Beanspruchung der Schnittkanten dar, da ein dort unerwünschter Abrieb von Fasern bzw. ein Austreten der Fasern des Trägergewebes sicher verhindert wird. Gegebenenfalls kann es vorteilhaft sein, ein Profilmaterial mit erhöhter Verschleißfestigkeit einzusetzen.

Die erfindungsgemäß bevorzugt als Profilmaterial verwendete Rundschnur läßt sich sehr kostengünstg mittels üblicherweise vorhandener Werkzeuge herstellen. Dieses begünstigt auch die wirtschaftliche Herstellung kleinerer Mengen, die jeweils ein exakt an das Material des Transportbandes abgestimmtes Schweißverhalten aufweisen. Vorteilhaft ist es weiterhin, daß sich die Zuführung einer Rundschnur zur Schweißstelle besonders einfach gestaltet, da bei Rundmaterial ein Verdrehen außeracht gelassen kann.

Sofern die Rundschnur etwa den gleichen Durchmesser aufweist wie das Transportband, läßt es sich leicht erreichen, daß der Durchmesser des von der aufgeschweißten Rundschnur gebildeten Kantenschutzes gleich der Gesamtdicke des Transportbandes ist.

Insbesondere bei Transportbändern mit geringer Gesamtdicke kann es vorteilhaft sein, die Schnittkanten des Transportbandes vor dem Aufschweißen der Rundschnur abzusschrägen, so daß sich eine vergrößerte Kontaktfläche ergibt, die die Festigkeit der Verschweißung erhöht.

Gemäß einer bevorzugten Ausführungsform der Erfindung ist es weiterhin vorgesehen, daß das Trägergewebe des Transportbandes aus einem Polyestergewebe hoher Festigkeit besteht, dessen Schmelzpunkt höher liegt als der Schmelzpunkt des Materials der Beschichtung und der aufgeschweißten Rundschnur. Hier hat es sich als vorteilhaft herausgestellt, wenn beispielsweise die Beschichtung des Transportbandes aus einem thermoplastischen Kunststoff mit einem Schmelzpunkt von etwa 155 °C und die den Schnittkantenschutz bildende Rundschnur aus einem thermoplastischen Kunststoff mit einem Schmelzpunkt von etwa 145 °C besteht.

Eine besonders intensive Verschweißung ist erreichbar, sofern die Beschichtung des Transportbandes und die den Schnittkantenschutz bildende Rundschnur aus gleichen thermoplastischen Kunststoffen mit unterschiedlichen Schmelzpunkten bestehen. Hier kann es sich beispielsweise um Polyurethane mit den genannten Schmelzpunkten handeln. Selbstverständlich sind die genannten Schmelzpunkte lediglich als beispielhafte Angaben zu verstehen. Die Schmelzpunkte können durchaus auch insgesamt höher oder niedriger bzw. auch weiter auseinander oder dichter beieinander liegen. Es bereitet keine Schwierigkeiten das Profilmaterial stets so an das jeweilige Bandmaterial anzupassen, daß ein abgestimmtes Schweißverhalten erreicht wird.

Das strangförmige Profilmaterial wird auf die Schnittkanten des Transportbandes aufgebracht, indem die Schnittkanten des Transportbandes und das strangförmige Profilmaterial unter Erwärmung auf die Schmelztemperaturen in einer Schweißvorrichtung fortlaufend zusammengeführt und verschweißt werden, wobei die einen höheren Schmelzpunkt aufweisende Beschichtung soweit erwärmt wird, daß es hier auch im Bereich der Kontaktflächen im wesentlichen zu keiner Verformung kommt.

Das einen niedrigeren Schmelzpunkt aufweisende Profilmaterial wird gleichzeitig soweit erwärmt, daß seine an der Schnittkante des Transportbandes anliegende Seite sich während des Verschweißens an die Form der Schnittkante des Transportbandes anpaßt und diese abdeckend sich vollflächig mit dem Transportband verbindet.

Aus diesem Verfahren ergibt sich der weitere wesentliche Vorteil, daß Transportbänder der genannten Gattung in endlicher oder auch in endloser Form jederzeit, sofern es die Einsatzbedingungen zweckmäßig erscheinen lassen bzw. es erfordern, mit einem wirksamen Kantenschutz versehen werden können.

Das mittels herkömmlicher Verfahren hergestellte Transportband wird zusammen mit dem Profilmaterial der Schweißvorrichtung kontinuierlich und fortlaufend zugeführt und kann somit völlig unabhängig von seiner Länge und seiner Breite sehr schnell mit dem Kantenschutz versehen werden. Auch einzelne Transportbänder können erfindungsgemäß an ihren Schnittkanten mit dem Profilmaterial versehen werden.

Die Erfindung wird nachfolgend anhand von in der Zeichnung dargestellten Ausführungsbeispielen näher erläutert.
Es zeigen:
Figur 1 einen Querschnitt durch ein Transportband mit einem Kantenschutz, das aus einem einseitig mit einer Beschichtung versehenen Trägergewebe besteht,
Figur 2 einen Querschnitt durch ein Transportband mit einem Kantenschutz, das aus zwei Lagen Trägergewebe mit dazwischen und beidseitig außen angeordneten Beschichtungen besteht,
Figur 3 zeigt eine Seitenansicht einer Schweißvorrichtung zur Anbringung des Kantenschutzes,
Figur 4 zeigt die Schweißvorrichtung gemäß der Figur 3 in der Draufsicht.

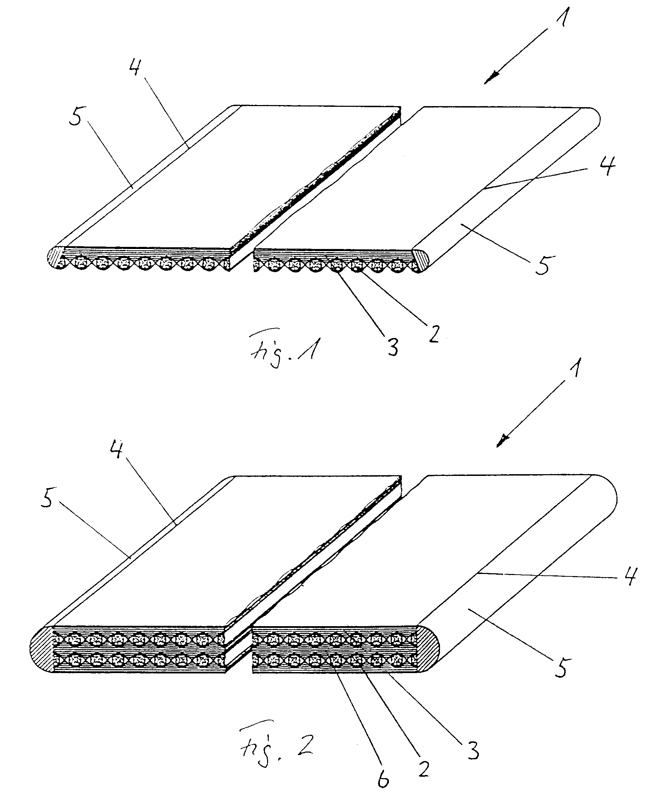

In der Figur 1 der Zeichnung ist mit 1 ein Transportband bezeichnet, das ein Trägergewebe 2 aufweist, das mit einer einseitigen thermoplastischen Beschichtung 3 versehen ist. Bei dem Trägergewebe 2 handelt es sich vorzugsweise um ein Polyestergewebe. Es können aber durchaus auch z. B. Polyamid-, Baumwolloder auch Mischgewebe eingesetzt werden.

Die Schnittkanten 4 des Transportbandes 1 sind mit je einer Rundschnur 5 verschweißt, die sich während des Schweißvorganges der Form der jeweiligen Schnittkante 4 anpaßt, d. h. abgeflacht wird und die Schnittkante 4 vollflächig abdeckt. Die Schnittkanten 4 sind abgeschrägt, so daß sich für das Verschweißen eine vergrößerte Kontaktfläche ergibt. Die Festigkeit der Schweißverbindung kann so erforderlichenfalls erhöht werden.

In dem Transportband 1 dient das Trägergewebe 2 der Herstellung einer ausreichenden Längs- und Querstabilität. Mittels der Beschichtung 3 ist durch eine entsprechende Materialauswahl eine exakte Anpassung der Oberfläche des Transportbandes 1 hinsichtlich ihrer Verschleißfestigkeit und ihres Reibwertes an das zu transportierende Material möglich. Das Trägergewebe 2 bildet im dargestellten Ausführungsbeispiel die Antriebsseite des Transportbandes 1.

Die Rundschnur 5 deckt die Schnittkanten 4 des Transportbandes 1 mit dem offenen Rand des Trägergewebes 2 völlig und ansatzlos ab, wobei eine glatte Oberfläche entsteht. Die Schnittkanten 4 werden somit versiegelt und die Anlagerung von Fremdkörpern wird aufgrund der glatten Oberfläche in idealer Weise verhindert.

Die aufgeschweißte Rundschnur 5 stellt darüber hinaus einen guten Schutz bei mechanischer Beanspruchung der Schnittkanten 4 dar, da, wie bereits beschrieben, ein unerwünschter Abrieb bzw. ein Austreten von Fasern des Trägergewebes 2 sicher verhindert wird.

Die Erfindung kann grundsätzlich bei allen Transportbändern 1 mit einem Trägergwebe 2 und wenigstens einer thermoplastischen Beschichtung 3 vorteilhaft eingesetzt werden. Dabei können auch mehrere Lagen Trägergewebe 2 vorgesehen sein. Das Trägergewebe 2 kann dann beispielsweise auch an der Ober und an der Unterseite des Transportbandes 1 von der Beschichtung 3 abgedeckt sein.

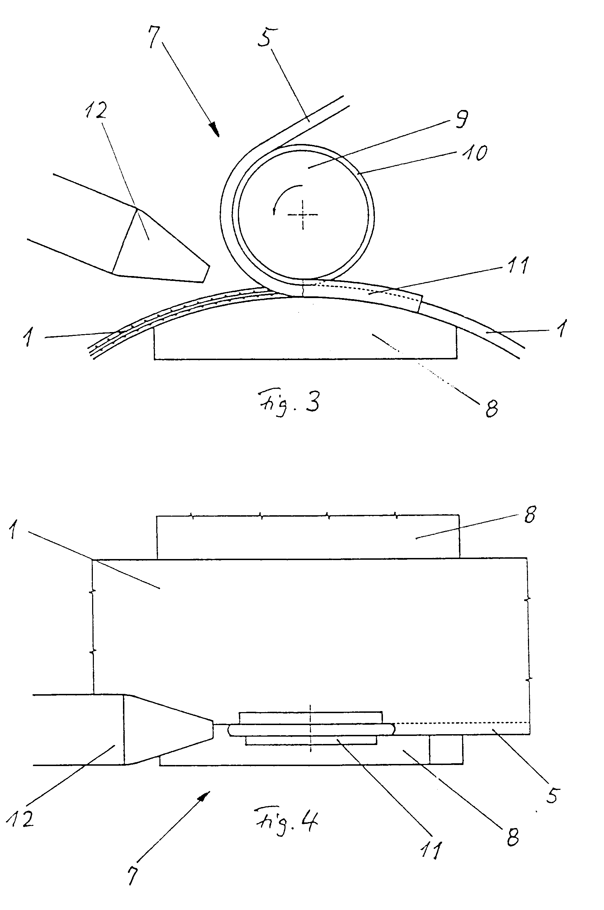

Ein derartiges Transportband 1 ist in der Figur 2 der Zeichnung dargestellt. Das Transportband 1 besteht hier aus zwei Lagen Trägergewebe 2 mit beidseitigen äußeren Beschichtungen 3 und einer zwischen den Trägergeweben 2 angeordneten inneren Beschichtung 6.

Da dieses Transportband 1 auch aufgrund der Anordnung der zwei Lagen Trägergewebe 2 eine größere Gesamtdicke hat, ergeben sich hier auch bei rechtwinklig geführten Schnittkanten 4 ausreichend große Kontaktflächen für die Verschweißung der den Kantenschutz bildenden Rundschnüre 5.

Aufgrund der beidseitig angeordneten äußeren Beschichtungen 3 handelt es sich hier um ein Transportband 1, bei dem das Trägergewebe 2 von den Beschichtungen 3 und der aufgeschweißten Rundschnur 5 völlig abgedeckt ist. Hier kann es folglich auch an der Bandunterseite an dem Trägergewebe 2 zu keinerlei Anlagerungen bzw. zu einem Abrieb von Fasern kommen. Insbesondere ein derartiges Transportband 1, dessen Trägergewebe 2 allseitig versiegelt ist, kann sehr universell auch in Bereichen mit extremen Anforderungen an die Reinhaltung eingesetzt werden.

Andererseits kann es aber unter Umständen durchaus auch sinnvoll sein, ein Transportband 1, das aus zwei außen liegenden Schichten Trägergewebe 2 besteht, zwischen denen eine thermoplastische Beschichtung 6 angeordnet ist, mit dem erfindungsgemäßen Kantenschutz zu versehen. Auch hier kann die Abdeckung der Schnittkanten 4 die Aufgabe erfüllen, hier ein verstärktes Hervortreten bzw. ein Ablösen von Fasern aufgrund einer mechanischen Beanspruchung zu verhindern.

Es versteht sich, daß der erfindungsgemäße Kantenschutz gegebenenfalls auch durch ein Aufschweißen z. B. eines kantigen Profilmaterials hergestellt werden kann. Hier bereitet es lediglich gewisse Schwierigkeiten, dessen Tendenz zum Verdrehen auszuschalten, d. h. das kantige Profilmaterial beim Schweißvorgang exakt zur Schnittkante 4 des Transportbandes 1 auszurichten.

In den Figuren 3 und 4 ist mit 7 eine Schweißvorrichtung zum Anbringen der Rundschnur 5 an den Schnittkanten 4 des Transportbandes 1 bezeichnet. Die Schweißvorrichtung 7 weist einen Führungstisch 8 als Auflage bei der kontinuierlichen Zuführung der Transportbandes 1 auf.

Eine Andruckrolle 9 mit einer umlaufenden Nut 10 dient der kontinuierlichen Zuführung und Führung der Rundschnur 5. Weiterhin ist eine seitliche Führung 11 für das Zusammenführen des Transportbandes 1 mit der Rundschnur 5 vorgesehen. Die seitliche Führung 11 hält die beiden Teile während des Schweißvorganges in dem erforderlichen sicheren Kontakt.

Die Schweißvorrichtung 7 weist weiterhin eine Warmluftdüse 12 zum Erzeugen der erforderlichen Schweißtemperatur auf.

Zum Anbringen des Kantenschutzes wird das Tranportband 1 der Schweißvorrichtung 7 in endlicher oder endloser Form in Pfeilrichtung zugeführt. Gleichzeitig wird die Rundschnur 5 von einer in der Zeichnung nicht dargestellten Vorratsrolle in Pfeilrichtung zugeführt. Mittels der Warmluftdüse 12 wird das zugeführte Material in der bereits beschriebenen Weise erwärmt und im Bereich der seitlichen Führung 11 miteinander verschweißt.

## Patentansprüche

1. Transportband (1) mit einem Trägergewebe (2), das mit wenigstens einer Beschichtung (3, 6) aus einem thermoplastischen Kunststoff versehenen ist, **dadurch gekennzeichnet**, daß an die Schnittkanten (4) des Transportbandes (1) ein thermoplastisches, strangförmiges Profilmaterial (Rundschnur 5) als Kantenschutz angeschweißt ist, wobei das strangförmige Profilmaterial (Rundschnur 5) einen niedrigeren Schmelzpunkt hat als der thermoplastische Kunststoff der Beschichtung (3, 6).

2. Transportband (1) nach Anspruch 1, dadurch gekennzeichnet, daß das strangförmige Profilmaterial als Rundschnur (5) ausgebildet ist.

3. Transportband (1) nach den Ansprüchen 1 und 2, dadurch gekennzeichnet, daß die Rundschnur (5) einen Durchmesser aufweist, der der Gesamtdicke des Transportbandes (1) entspricht.

4. Transportband (1) nach den Ansprüchen 1, 2 und 3, dadurch gekennzeichnet, daß die an der Schnittkante (4) des Transportbandes (1) anliegende Seite der Rundschnur (5) sich während des Verschweißens an die Form der Schnittkante (4) anpaßt und diese abdeckend sich vollflächig mit dem Transportband (1) verbindet.

5. Transportband (1) nach den Ansprüchen 1, 2, 3 und 4, dadurch gekennzeichnet, daß die Schnittkanten (4) des Transportbandes (1) vor dem Aufschweißen der Rundschnur (5) abgeschrägt sind, derart, daß sich eine vergrößerte Kontaktfläche ergibt.

6. Transportband (1) nach Anspruch 1 und gegebenenfalls einem oder mehreren der weiteren Ansprüche, dadurch gekennzeichnet, daß das Trägergewebe (2) des Transportbandes (1) aus einem Gewebe besteht, dessen Schmelzpunkt höher liegt als der Schmelzpunkt der Beschichtung (3, 6) und der aufgeschweißten Rundschnur (5).

7. Transportband (1) nach Anspruch 1 und gegebenenfalls einem oder mehreren der weiteren Ansprüche, dadurch gekennzeichnet, daß das Trägergewebe (2) des Transportbandes (1) aus einem Polyestergewebe besteht.

8. Transportband (1) nach Anspruch 1 und gegebenenfalls einem oder mehreren der weiteren Ansprüche, dadurch gekennzeichnet, daß die Beschichtung (3, 6) des Transportbandes (1) aus einem thermoplastischen Kunststoff mit einem Schmelzpunkt von etwa 155 °C und die aufgeschweißte Rundschnur (5) aus einem thermoplastischen Kunststoff mit einem Schmelzpunkt von etwa 145 °C bestehen.

9. Transportband (1) nach Anspruch 1 und gegebenenfalls einem oder mehreren der weiteren Ansprüche, dadurch gekennzeichnet, daß die Beschichtung (3, 6) des Transportbandes (1) und die Rundschnur (5) aus gleichen thermoplastischen Kunststoffen mit unterschiedlichen Schmelzpunkten bestehen.

10. Transportband (1) nach Anspruch 1 und gegebenenfalls einem oder mehreren der weiteren Ansprüche, dadurch gekennzeichnet, daß die Beschichtung (3, 6) des Transportbandes (1) und die Rundschnur (5) aus Polyurethanen mit einem Schmelzpunkt von etwa 155 °C und etwa 145 °C bestehen.

11. Verfahren zur Herstellung eines Transportbandes (1) nach Anspruch 1 und gegebenenfalls einem oder mehreren der weiteren Ansprüche, dadurch gekennzeichnet, daß die Schnittkanten (4) des Transportbandes (1) und das strangförmige Profilmaterial (Rundschnur 5) unter Erwärmung auf die Schmelztemperaturen in einer Schweißvorrichtung (7) fortlaufend zusammengeführt und verschweißt werden, wobei die einen höheren Schmelzpunkt aufweisende Beschichtung (3, 6) nur soweit erwärmt wird, daß es hier auch im Bereich der Kontaktflächen im wesentlichen zu keiner Verformung kommt, während das einen niedrigeren Schmelzpunkt aufweisende Profilmaterial (Rundschnur 5) soweit erwärmt wird, daß es verformt wird.

12. Verfahren zur Herstellung eines Transportbandes (1) nach Anspruch 1 und gegebenenfalls einem oder mehreren der weiteren Ansprüche, dadurch gekennzeichnet, daß das Profilmaterial (Rundschnur 5) soweit erwärmt wird, daß die an der Schnittkante (4) des Transportbandes (1) anliegende Seite des Profilmaterials (Rundschnur 5) sich während des Verschweißens an die Form der Schnittkante (4) des Transportbandes (1) anpaßt und diese abdeckend sich vollflächig mit dem Transportband (1) verbindet.

13. Verfahren zur Herstellung eines Transportbandes (1) nach Anspruch 1 und gegebenenfalls einem oder mehreren der weiteren Ansprüche, dadurch kennzeichnet, daß die Schnittkanten (4) des Transportbandes (1) vor dem Verschweißen mit dem Profilmaterial (Rundschnur 5) abgeschrägt werden.

## Claims

1. A conveyor belt (1) with a support fabric (2) which is provided with at least one thermoplastic coating (3, 6), characterised in that a thermoplastic, strand-like profile material (round cord 5) is welded to the cut or cutting edges (4) of the conveyor belt (1) as an edge protection, the strand-like profile material (round cord 5) having a lower melting point than the thermoplastic material of the coating (3, 6).

2. A conveyor belt (1) according to Claim 1, characterised in that the strand-like profile material is constructed as a round cord (5).

3. A conveyor belt (1) according to Claim 1 and Claim 2, characterised in that the round cord (5) has a diameter corresponding to the total thickness of the conveyor belt (1).

4. A conveyor belt (1) according to Claims 1, 2 and 3, characterised in that the side of the round cord (5) engaging on the cut or cutting edge (4) of the conveyor belt (1) is adapted during welding to the shape of the cut or cutting edge (4) and covers the latter by being connected in a full-surface manner to the conveyor belt (1).

5. A conveyor belt (1) according to claims 1, 2, 3 and 4, characterised in that, prior to the welding-on of the round cord (5), the cut or cutting edges (4) of the conveyor belt (1) are bevelled in such a way that a larger contact face is obtained.

6. A conveyor belt (1) according to Claim 1 and, if desired, to one or more of the subsequent Claims, characterised in that the support fabric (2) of the conveyor belt (1) is made from a fabric having a melting point which is higher than that of the coating (3, 6) and the welded-on round cord (5).

7. A conveyor belt (1) according to Claim 1 and, if desired, to one or more of the subsequent Claims, characterised in that the support fabric (2) of the conveyor belt (1) is a polyester fabric.

8. A conveyor belt (1) according to Claim 1 and, if desired, to one or more of the subsequent Claims, characterised in that the coating (3, 6) of the conveyor belt (1) comprises a thermoplastic material with a melting point of approximately 155°C and the welded-on round cord (5) comprises a thermoplastic material with a melting point of approximately 145°C.

9. A conveyor belt (1) according to Claim 1 and, if desired, to one or more of the subsequent Claims, characterised in that the coating (3, 6) of the conveyor belt (1) and the round cord (5) comprise the same thermoplastic materials but with different melting points.

10. A conveyor belt (1) according to Claim 1 and, if desired, to one or more of the subsequent Claims, characterised in that the coating (3, 6) of the conveyor belt (1) and the round cord (5) comprise polyurethanes with melting points of approximately 155°C and approximately 145°C, respectively.

11. A method for the manufacture of a conveyor belt (1) according to Claim 1 and, if desired, to one or more of the subsequent Claims, characterised in that the cut or cutting edges (4) of the conveyor belt (1) and the strand-like profile material (round cord 5) are continuously brought together and welded in a welding apparatus (7), accompanied by heating to the melting points, the coating (3, 6) having the higher melting point only being heated to such an extent that no deformation occurs in the vicinity of the contact faces, whilst the profile material (round cord 5) having a lower melting point is heated until it deforms.

12. A method for the manufacture of a conveyor belt (1) according to Claim 1 and, if desired, to one or more of the subsequent Claims, characterised in that the profile material (round cord 5) is heated to such an extent that the side of the profile material (round cord 5) engaging the cut or cutting edge (4) of the conveyor belt (1) adapts during welding to the shape of the cut or cutting edge (4) of the conveyor belt (1) and covers the latter by being connected in a full-surface manner to the conveyor belt (1).

13. A method for the manufacture of a conveyor belt according to Claim 1 and, if desired, to one or more of the subsequent Claims, characterised in that, prior to welding to the profile material (round cord 5), the cut or cutting edges (4) of the conveyor belt (1) are bevelled.

## Revendications

1. Bande transporteuse (1) comprenant un tissu porteur (2) muni d'au moins un revêtement (3, 6) en matière synthétique thermoplastique, caractérisée en ce qu'un matériau thermoplastique profilé continu (boudin 5) faisant fonction de protège-bord est rapporté par soudage sur les bords de coupe (4) de la bande transporteuse (1), le matériau profilé continu (boudin 5) possédant un point de fusion inférieur à celui de la matière synthétique thermoplastique du revêtement (3, 6).

2. Bande transporteuse (1) selon la revendication 1, caractérisée en ce que le matériau profilé continu est conçu sous la forme d'un boudin (5).

3. Bande transporteuse (1) selon les revendications 1 et 2, caractérisée en ce que le boudin (5) présente un diamètre correspondant à l'épaisseur totale de la bande transporteuse (1).

4. Bande transporteuse (1) selon les revendications 1, 2 et 3, caractérisée en ce que le côté du boudin (5) appliqué contre le bord de coupe (4) de la bande transporteuse (1) épouse, lors du soudage, la forme du bord de coupe (4) et, en le recouvrant, adhère à la bande transporteuse (1) sur toute la surface de celle-ci.

5. Bande transporteuse (1) selon les revendications 1, 2, 3 et 4, caractérisée en ce que les bords de coupe (4) de la bande transporteuse (1) sont chanfreinés avant le soudage du boudin (5), de façon à obtenir une surface de contact agrandie.

6. Bande transporteuse (1) selon la revendication 1 et éventuellement selon une ou plusieurs des autres revendications, caractérisée en ce que le tissu porteur (2) de la bande transporteuse (1) est constitué par un tissu dont le point de fusion est supérieur au point de fusion du revêtement (3, 6) et du boudin soudé (5).

7. Bande transporteuse (1) selon la revendication 1 et éventuellement selon une ou plusieurs des autres revendications, caractérisée en ce que le tissu porteur (2) de la bande transporteuse (1) est constitué par un tissu en polyester.

8. Bande transporteuse selon la revendication 1 et éventuellement selon une ou plusieurs des autres revendications, caractérisée en ce que le revêtement (3, 6) de la bande transporteuse (1) est réalisé dans une matière synthétique thermoplastique possédant un point de fusion d'environ 155 °C et le boudin soudé (5) est réalisé dans une matière synthétique thermoplastique possédant un point de fusion d'environ 145 °C.

9. Bande transporteuse (1) selon la revendication 1 et éventuellement selon une ou plusieurs des autres revendications, caractérisée en ce que le revêtement (3, 6) de la bande transporteuse (1) et le boudin (5) sont réalisés dans des matières synthétiques thermoplastiques identiques possédant des points de fusion différents.

10. Bande transporteuse (1) selon la revendication 1 et éventuellement selon une ou plusieurs des autres revendications, caractérisée en ce que le revêtement (3, 6) de la bande transporteuse (1) et le boudin (5) sont réalisés en polyuréthanne possédant un point de fusion compris entre environ 155 °C et environ 145 °C.

11. Procédé de fabrication d'une bande transporteuse (1) selon la revendication 1 et éventuellement selon une ou plusieurs des autres revendications, caractérisé en ce que les bords de coupe (4) de la bande transporteuse (1) et le matériau profilé continu (boudin 5) sont réunis et soudés au défilé dans un dispositif de soudage (7) tout en étant portés aux températures de fusion, le revêtement (3, 6) présentant un point de fusion plus élevé étant chauffé tant qu'aucune déformation notable ne se produit dans la zone des surfaces de contact, tandis que le matériau profilé (boudin 5) présentant un point de fusion plus bas est chauffé jusqu'à ce qu'il se déforme.

12. Procédé de fabrication d'une bande transporteuse (1) selon la revendication 1 et éventuellement selon une ou plusieurs des autres revendications, caractérisé en ce que le matériau profilé (boudin 5) est chauffé jusqu'à ce que le côté appliqué contre le bord de coupe (4) de la bande transporteuse (1) épouse, lors du soudage, la forme du bord de coupe (4) de la bande transporteuse (1) et, en le recouvrant, adhère à la bande transporteuse (1) sur toute la surface de celle-ci.

13. Procédé de fabrication d'une bande transporteuse (1) selon la revendication 1 et éventuellement selon une ou plusieurs des autres revendications, caractérisé en ce que les bords de coupe (4) de la bande transporteuse (1) sont chanfreinés avant le soudage avec le matériau profilé (boudin 5).
